Europäisches Patentamt

European Patent Office

Office européen des brevets

(19)

(11) Veröffentlichungsnummer: **0 350 727 B1**

(12) **EUROPÄISCHE PATENTSCHRIFT**

(45) Veröffentlichungstag der Patentschrift: **16.12.92**

(21) Anmeldenummer: **89111904.2**

(22) Anmeldetag: **30.06.89**

(51) Int. Cl.⁵: **H02K 3/28**, H02K 3/12, H02K 41/03

(54) **Zweileiterwicklung eines synchronen Drehstromlinearmotors.**

(30) Priorität: **15.07.88 DE 3824662**

(43) Veröffentlichungstag der Anmeldung:
**17.01.90 Patentblatt 90/03**

(45) Bekanntmachung des Hinweises auf die
Patenterteilung:
**16.12.92 Patentblatt 92/51**

(84) Benannte Vertragsstaaten:
**AT DE ES GB IT**

(56) Entgegenhaltungen:

**Nahverkehrs-Praxis vol. 1986, no. 6, Seiten
225 - 228; "Kriterien zur Auslegung des M-
Bahn-Trakfionsteils"**

(73) Patentinhaber: **Licentia Patent-
Verwaltungs-GmbH
Theodor-Stern-Kai 1
W-6000 Frankfurt/Main 70(DE)**

(72) Erfinder: **Ciessow, Günter Dipl.-Ing.
Brauhofstrasse 7
W-1000 Berlin 10(DE)**
Erfinder: **Nieden, Fritz Dipl.-Ing.
Bülowstrasse 7
W-1000 Berlin 30(DE)**

(74) Vertreter: **Lertes, Kurt, Dr. et al
Licentia Patent-Verwaltungs-GmbH Theodor-
Stern-Kai 1
W-6000 Frankfurt/M 70(DE)**

EP 0 350 727 B1

## Beschreibung

Es ist bekannt, den aktiven Teil eines synchronen Linearmotors aus mehreren Langstatorabschnitten zu bilden, die von je einem Umrichter versorgt werden. Die Abschnitte bestehen aus zusammengeschalteten Wicklungsseiten, die sich rechts und links am Fahrweg befinden. Dabei sind zwei Leiter parallel in Nuten verlegt und als Wellenwicklung ausgeführt. Durch entsprechende Verschaltung der Leiter und Statorseiten untereinander kann die effektive Leiterzahl pro Nut für einen Abschnitt zwischen 1, 1,5 und 2 variiert werden. Dazu wird z.B. auf Nahverkehrspraxis Nr. 6/1986, S. 225, verwiesen.

Systeme mit höherer Anforderung an die Antriebsleistung bedingen eine getrennte Speisung der Abschnittsseiten aus jeweils einem Stromrichter. Hierbei läßt sich eine optimale Anpassung des Antriebes an die geforderten fahrdynamischen Werte nur erzielen, wenn beide Statorhälften eines Abschnittes für sich die gleiche effektive Leiterzahl pro Nut aufweisen. Eine Leiterzahl pro Nut von 1,5 wird z.B. bei gemeinsamer Abschnittsspeisung dadurch erreicht, daß die eine Seite zwei und die andere Seite einen Leiter pro Nut effektiv aufweist und beide Seiten hintereinandergeschaltet werden. Daraus ergibt sich ein Mittelwert von 1,5, was auch die Gesamtgegenspannung und die Schubkraft beeinflußt, wenn sich ein Fahrzeug auf dem Abschnitt befindet.

Grundsätzlich ist die unterschiedliche Verschaltung der Abschnittsseiten auch bei getrennter Speisung möglich, nur richtet sich dann die maximale Geschwindigkeit des Fahrzeugs nach der Spannungsgrenze in der Statorseite mit zwei Leitern pro Nut, da dort die höhere Gegenspannung von den Fahrzeugmagneten induziert wird. Somit erbringt diese Lösung keinerlei Vorteile, da sich die Geschwindigkeit gegenüber der beidseitigen Schaltung von zwei Leitern pro Nut nicht erhöhen läßt und andererseits die Schubkraft geringer wird.

Aufgabe der Erfindung ist es, eine optimale Anpassung des Antriebes an die geforderten fahrdynamischen Werte durch Veränderung der effektiven Leiterzahlen pro Nut bei getrennter Einspeisung unter Ausnutzung der vorgenannten Vorteile bei gemeinsamer Versorgung zu erreichen.

Diese Aufgabe wird gemäß den kennzeichnenden Merkmalen der Ansprüche 1 oder 4 gelöst. Vorteilhafte Ausgestaltungen sind den Unteransprüchen entnehmbar.

Anhand von zwei Wickelschemata wird die Erfindung im nachstehenden näher erläutert.

Es zeigen:

Fig. 1    Wickelschema für einen Strang bei effektiver Leiterzahl von 1,5 oder 1,33 für eine Abschnittsseite

Fig. 2    veränderte Leiterverlegung bei Hintereinanderschaltung und effektiver Leiterzahl von 2 für einen Strang

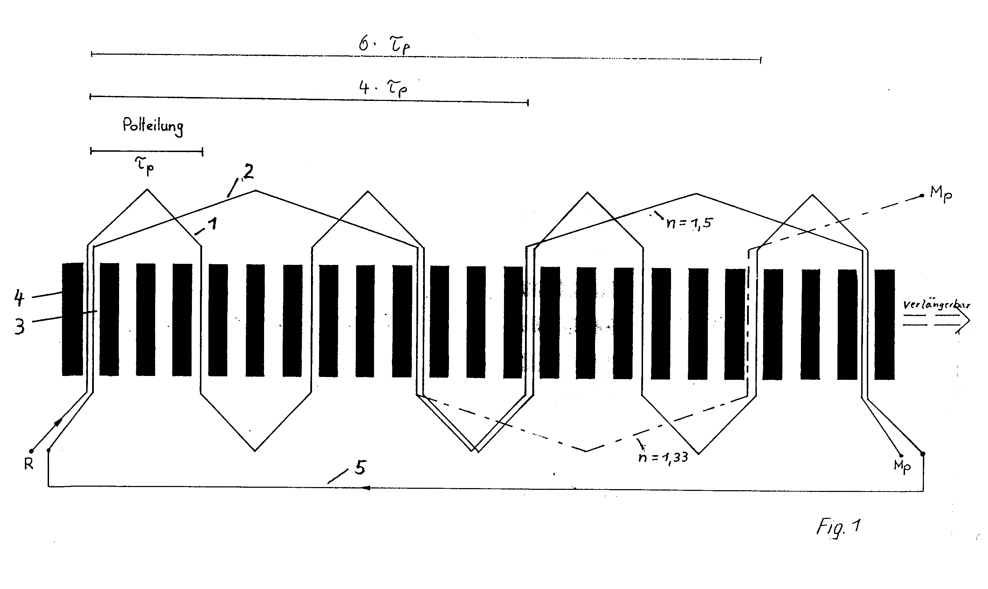

Nach Fig. 1 sind die beiden Leiter 1 und 2 nicht mehr in jeder Nut 3 des Langstatoreisenpaketes 4 parallel vorhanden. So verlaufen die Spulenwindungen des Leiters 1 wie bislang wellenförmig fortschreitend und überdecken wie bisher jeweils eine Polteilung $\tau_p$, während der Leiter 2 beim zweiten Umlauf so angeordnet wird, daß sich die Spulenwindungen über 3 und eine Polteilung oder ausschließlich über 3 Poleteilungen erstrecken. Dies gilt für jeden der drei Stränge; gezeigt ist Strang R. Es läßt sich so eine effektive Leiterzahl n von 1,5 oder 1,33 pro Nut erreichen. n = 1,5 bei einer Gesamtüberdeckung von 4 $\tau_p$; 1,33 bei einer Gesamtüberdeckung von 6 $\tau_p$. Für die Reihenschaltung der beiden Leiter ist eine äußere Rückverbindung 5 vom Ende des Stators zum Anfang des Stators nötig.

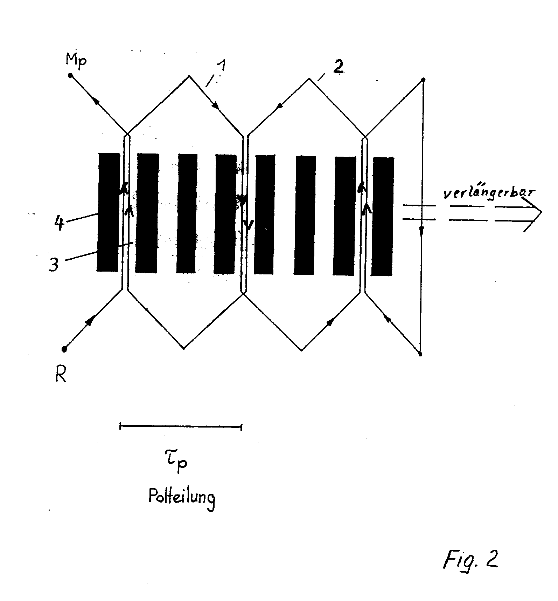

Fig. 2 zeigt eine Wicklungsanordnung für den Fall, daß eine Abschnittsseite für sich zwei Leiter pro Nut effektiv aufweisen soll, so daß die beiden Einzelleiter eines Stranges auch hier hintereinander geschaltet werden müssen. Dazu wird der zweite Leiter derart durch den Stator zurückgeführt, daß die Stromrichtung in den betreffenden Nuten mit der im ersten Leiter 1 übereinstimmt. Der Vorteil besteht hier darin, daß eine zusätzliche Kabelverbindung vom Ende zum Anfang der Langstatorabschnittsseite einge spart werden kann. Vom Prinzip her läßt sich diese Möglichkeit der inneren Rückführung auch auf den Gegenstand des Anspruches 1 anwenden.

## Patentansprüche

1. Zweileiterwicklung eines synchronen Drehstromlinearmotors mit aus Abschnitten zusammengesetztem Langstator und getrennter Speisung der Abschnittsseiten,
   **dadurch gekennzeichnet,**
   daß die beiden Leiter (1, 2) jedes Stranges einer Abschnittsseite als Wellenwicklungen mit unterschiedlicher Polteilung so in Reihe geschaltet sind, daß nicht mehr beide Leiter in jeder Nut parallel vorhanden sind, wobei der erste Leiter (1) mit üblicher Polteilung $\tau_p$ - (vorzugsweise $\tau_p$ = 1) fortschreitet und nach Rückführung zum Anfang der Abschnittsseite die Spulenwindungen des zweiten Leiters (2) jeweils mit veränderter Polteilung in gleichem Richtungssinn verlegt sind.

2. Zweileiterwicklung nach Anspruch 1,
   **dadurch gekennzeichnet,**
   daß sich die Spulenwindungen des zweiten Leiters (2) für n = 1,5 abwechselnd über Pol-

teilung $\tau_p$ = 3 und Polteilung $\tau_p$ = 1 erstrekken.

3. Zweileiterwicklung nach Anspruch 1,
**dadurch gekennzeichnet,**
daß sich die Spulenwindungen des zweiten Leiters (2) für n = 1,33 über Polteilungen $\tau_p$ = 3 erstrecken.

4. Zweileiterwicklung eines synchronen Drehstromlinearmotors mit aus Abschnitten zusammengesetztem Langstator und getrennter Speisung der Abschnittsseiten,
**dadurch gekennzeichnet,**
daß die beiden Leiter (1, 2) jedes Stranges einer Abschnittsseite als Wellenwicklungen in Reihe geschaltet sind, wobei der erste Leiter (1) mit üblicher Polteilung $\tau_p$ fortschreitet und der zweite Leiter (2) ohne Rückführung direkt anschließend in denselben Nuten (3) mit gleicher Polteilung $\tau_p$ zurücklaufend so verlegt ist, daß die Stromrichtungen in den betreffenden Nuten (3) übereinstimmen.

## Claims

1. Two-wire winding of a synchronous three-phase linear motor with long stator assembled from sections and separate supply to the section sides, characterised thereby that the two wires (1, 2) of each phase of a section side are so connected in series as wave windings with different pole pitches that both wires are no longer present parallelly in each groove, wherein the first wire (1) advances with usual pole pitch $\tau_p$ (preferably $\tau_p$ = 1) and, after leading back to the start of the section side, the core windings of the second wire (2) are laid each time with changed pole pitch in the same sense of direction.

2. Two-wire winding according to claim 1, characterised thereby that the core windings of the second wire (2) extend, for n = 1.5, alternately over pole pitch $\tau_p$ = 3 and pole pitch $\tau_p$ = 1.

3. Two-wire winding according to claim 1, characterised thereby that the core windings of the second wire (2) extend, for n = 1.33, over pole pitches $\tau_p$ = 3.

4. Two-wire winding of a synchronous three-phase linear motor with long stator assembled from sections and separate supply to the section sides, characterised thereby that the two wires (1, 2) of each phase of a section side are connected in series as wave windings, wherein the first wire (1) advances with usual pole pitch

$\tau_p$ and the second wire (2) is so laid, without leading back, running back directly adjoining in the same grooves (3) with like pole pitch $\tau_p$ that the current directions in the respective grooves (3) correspond.

## Revendications

1. Enroulement à deux conducteurs d'un moteur linéaire synchrone triphasé avec un stator longitudinal composé de segments et avec une alimentation séparée des faces de segments,

caractérisé en ce que,

les deux conducteurs (1, 2) de chaque branche d'une face de segments en tant qu'enroulement ondulé avec différents écartements polaires sont commutés en série de telle façon que les deux conducteurs ne soient plus parallèles dans chaque gorge, du fait que le premier conducteur (1) progresse avec l'écartement polaire $\tau_p$ habituel (de préférence $\tau_p$ = 1) et qu'après la rétroaction au début de la face du segment les spires de bobines du second conducteur (2) ayant un écartement polaire modifié soient déplacées chacune dans le même sens directionnel.

2. Enroulement à deux conducteurs selon revendication 1

caractérisé en ce que

les spires de bobines du deuxième conducteur (2) pour n = 1,5 s'étendent chacune leur tour sur l'écartement polaire $\tau_p$ = 3 et l'écartement polaire $\tau_p$ = 1.

3. Enroulement à deux conducteurs selon revendication 1

caractérisé en ce que

les spires de bobines du deuxième conducteur (2) pour n = 1,33 s'étendent chacune leur tour sur l'écartement polaire $\tau_p$ = 3.

4. Enroulement à deux conducteurs d'un moteur linéaire synchrone triphasé avec un stator longitudinal composé de segments et avec une alimentation séparée des faces de segments,

caractérisé en ce que,

les deux conducteurs (1, 2) de chaque branche d'une face de segment en tant qu'enroulement ondulé sont commutés en série, le premier conducteur (1) progressant avec l'écartement polaire habituel $\tau_p$ et le deuxième conducteur (2) étant déplacé sans rétroaction directement à la suite dans la même gorge (3) avec le même écartement polaire $\tau_p$ de façon que les directions de courant dans les gorges concernées concordent.

Fig. 1

EP 0 350 727 B1

Mp

R

1 2

4

3

verlängerbar

$\tau_p$

Polteilung

Fig. 2

6